# EUROPÄISCHE PATENTSCHRIFT

(11) **EP 3 393 680 B1**
(45) Veröffentlichungstag und Bekanntmachung des Hinweises auf die Patenterteilung: **15.01.2020**
(21) Anmeldenummer: 16815786.5
(22) Anmeldetag: 13.12.2016
(51) Int. Cl.: G01S 15/08, G01S 15/87, B06B 1/06, G01S 15/93, G01S 7/521, G10K 9/125, G10K 11/00

(54) **ULTRASCHALLSENSORVORRICHTUNG MIT EINER ZUMINDEST BEREICHSWEISE FLEXIBLEN LEITERPLATTE, ULTRASCHALLSENSORANORDNUNG UND KRAFTFAHRZEUG**
ULTRASONIC SENSOR DEVICE COMPRISING A CIRCUIT BOARD WHICH IS FLEXIBLE AT LEAST IN SOME REGIONS, ULTRASONIC SENSOR ARRANGEMENT AND MOTOR VEHICLE
DISPOSITIF DE DÉTECTION PAR ULTRASONS MUNI D'UNE CARTE DE CIRCUIT IMPRIMÉ FLEXIBLE AU MOINS PAR ENDROITS, SYSTÈME DE DÉTECTION PAR ULTRASONS ET VÉHICULE AUTOMOBILE

(30) Priorität: 21.12.2015 DE 102015122417
(43) Veröffentlichungstag der Anmeldung: 31.10.2018
(73) Patentinhaber: Valeo Schalter und Sensoren GmbH, 74321 Bietigheim-Bissingen (DE)
(72) Erfinder: JUNG, Thomas, 74321 Bietigheim-Bissingen (DE); HAMM, Wolfgang, 74321 Bietigheim-Bissingen (DE)
(74) Vertreter: Enge, Sebastian
(86) Internationale Anmeldenummer: PCT/EP2016/080732
(87) Internationale Veröffentlichungsnummer: WO 2017/108494

(56) Entgegenhaltungen:
- GB-A- 2 328 748
- US-A- 3 927 662
- US-A- 5 339 291
- US-A- 5 946 273
- US-A1- 2010 277 040
- US-A1- 2012 065 479
- US-A1- 2012 277 639
- US-A1- 2013 261 465
- US-A1- 2014 378 839
- US-A2- 2015 049 586

## Beschreibung

Die Erfindung betrifft eine Ultraschallsensorvorrichtung für ein Kraftfahrzeug. Die Ultraschallsensorvorrichtung weist zumindest eine bereichsweise flexibel ausgebildete Leiterplatte mit einem ersten Leiterplattenbereich auf. Auf dem ersten Leiterplattenbereich ist ein Wandlerelement angeordnet, welches zum Aussendung und/oder Empfangen von Ultraschallsignalen ausgebildet ist. Die Erfindung betrifft auch eine Ultraschallsensoranordnung mit zumindest einer an einem Kraftfahrzeugbauteil eines Kraftzeugs angeordneten Ultraschallsensorvorrichtung sowie ein Kraftfahrzeug mit einer Ultraschallsensoranordnung.

Ultraschallsensorvorrichtungen sind aus dem Stand der Technik bekannt. So zeigt die WO 2008/125260 A1 einen Ultraschallsensor mit einem Aktor zur Aussendung und/oder einem Sensor zum Empfangen von Schwingungen und einer zugehörigen Elektronik zur Erzeugung und/oder Auswertung der Schwingungen. Es ist vorgesehen, dass der ein Bauteil zum Schwingen anregende, aussendende Aktor und/oder empfangende Sensor ein Piezokeramikelement mit einer vorgebbaren aktorischen und/oder sensorischen Leistung innerhalb eines Piezokeramikmoduls ist, das von außen nicht sichtbar in das Bauteil integriert oder in dem Bauteil applizierbar ist.

Aus der US 2010/0277040 A1 ist eine Ultraschallsensorvorrichtung bekannt, bei welcher zwei Wandlerelemente auf einer flexiblen Folie angeordnet sind.

Aus der US 2012/0277639 A1 ist ein Ultraschallwandler bekannt, bei welchem mehrere Wandlerelemente auf einer flexiblen Leiterplatte angeordnet sind.

Es ist Aufgabe der Erfindung, eine Ultraschallsensorvorrichtung, eine Ultraschallsensoranordnung sowie ein Kraftfahrzeug bereitzustellen, mit welchem ein Umgebungsbereich eines Kraftfahrzeugs präziser erfasst werden kann.

Diese Aufgabe wird erfindungsgemäß durch eine Ultraschallsensorvorrichtung, durch eine Ultraschallsensoranordnung sowie durch ein Kraftfahrzeug mit den Merkmalen gemäß den jeweiligen unabhängigen Ansprüchen gelöst.

Eine erfindungsgemäße Ultraschallsensorvorrichtung für ein Kraftfahrzeug umfasst eine zumindest bereichsweise flexibel ausgebildete Leiterplatte mit einem ersten Leiterplattenbereich. Auf dem ersten Leiterplattenbereich ist ein Wandlerelement angeordnet, welches zum Aussenden und/oder Empfangen von Ultraschallsignalen ausgebildet ist. Als ein wesentlicher Gedanke der Erfindung ist vorgesehen, dass die Leiterplatte an dem ersten Leiterplattenbereich und/oder an einem zweiten Leiterplattenbereich flexibel ausgebildet ist, und an dem zweiten Leiterplattenbereich ein zu dem ersten Wandlerelement separates zweites Wandlerelement der Ultraschallsensorvorrichtung angeordnet ist, welches zum Aussenden und/oder Empfangen von Ultraschallsignalen ausgebildet ist.

Durch die erfindungsgemäße Ultraschallsensorvorrichtung kann ein Umgebungsbereich des Kraftfahrzeugs präziser erfasst werden. So kann durch die zumindest zwei Wandlerelemente eine Richtung, aus der ein Echo empfangen wird, bestimmt werden. Weiterhin lässt sich durch zumindest den flexibel ausgebildeten zweiten Leiterplattenbereich eine Abstrahlrichtung der Wandlerelemente in vielfältiger Weise vorgeben.

Zudem lässt sich die Ultraschallsensorvorrichtung einfacher und in vielfältiger Weise an einem Bauteil des Kraftfahrzeugs anordnen, da die zumindest bereichsweise flexible Leiterplatte an eine durch das Kraftfahrzeugbauteil vorgegebene Form angepasst werden kann. Weiterhin lassen sich die Wandlerelemente in vielfältiger Weise derart ausrichten, dass ein gewünschter Umgebungsbereich des Kraftfahrzeugs präzise abgetastet werden kann.

Nach dem Stand der Technik ist ein Wandlerelement üblicherweise in einem starren Gehäuse verbaut. Vor allem im verdeckten Verbau beispielsweise hinter einer Türe des Kraftfahrzeugs oder einem Stoßfänger des Kraftfahrzeugs kommt ein starres Bauteil, meist ein Keramikring zum Einsatz. Nachteilig ist dadurch, dass der Verbau beziehungsweise die Platzierung im Kraftfahrzeug oft schwierig ist, da die Konturen des Kraftfahrzeugbauteils oft stark geschwungen sind. Es ergeben sich dann beispielsweise unterschiedliche Schichtdicken des eingesetzten Klebstoffs und die Funktion des Wandlerelements wird nachteilig beeinflusst oder bei starken Wölbungen sogar ganz unmöglich.

Der erste Leiterplattenbereich und der zweite Leiterplattenbereich liegen insbesondere als unterschiedliche Leiterplattenbereiche vor. Das erste Wandlerelement und/oder das zweite Wandlerelement können beispielsweise als Piezoelement ausgebildet sein. Die Wandlerelemente und vorzugsweise eine Steuerelektronik der Ultraschallsensorvorrichtung sind auf der gemeinsamen Leiterplatte angeordnet. Der Bereich zwischen den Wandlerelementen ist zumindest bereichsweise flexibel ausgebildet. Dadurch können die Wandlerelemente auch direkt auf ein Kraftfahrzeugbauteil des Kraftfahrzeugs aufgeklebt werden. Vorteilhaft ist, dass durch mehrere Wandlerelemente sowohl beim Senden als auch beim Empfangen der Ultraschallsignale eine Richtcharakteristik vorgegeben werden kann. Beim Senden werden die Wandlerelemente mit einem bestimmten Phasenversatz angeregt und der Schall kann somit in eine bestimmte Richtung gelenkt werden. Im Empfangsfall kann dann beispielsweise ein Phasenwinkel gemessen werden und dadurch die Richtung, aus der der Schall eintrifft, bestimmt werden. Insbesondere ist es vorgesehen, dass mehrere Wandlerelemente von der Ultraschallsensorvorrichtung umfasst werden, da sich mit steigender Anzahl der Wandlerelemente eine Ortsauflösung hinsichtlich der Abtastung des Umgebungsbereichs erhöht. Bei einer großen Anzahl von Wandlerelementen kann die Funktion der Ultraschallsensorvorrichtung dann beispielsweise mit einer akustischen Kamera verglichen werden. Es lässt sich dann beispielsweise ein Objekt im Umgebungsbereich mit seinen X-, Y- und Z-Koordinaten im Umgebungsbereich mittels der Ultraschallsensorvorrichtung ermitteln. Die Auswertung der durch die Ultraschallsensorvorrichtung erfassten Information kann dann beispielsweise mit einer Auswerteeinheit in der Ultraschallsensorvorrichtung selbst erfolgen oder aber in einer separat zu der Ultraschallsensorvorrichtung ausgebildeten Auswerteeinheit.

Durch die flexible Verbindung der Wandlerelemente kann die Ultraschallsensorvorrichtung auch an stark gewölbten Kraftfahrzeugbauteilen angeordnet werden. Die Kraftfahrzeugbauteile, welche beispielsweise starr ausgebildet sind, bedürfen dadurch keiner speziellen Anpassung.

In einer erfindungsgemäßen Variante ist es vorgesehen, dass die Leiterplatte zumindest ein flexibles streifenförmiges erstes Leiterplattenteilelement als den zweiten Leiterplattenbereich aufweist, welches mit einem Leiterplattenhauptelement der Leiterplatte als den ersten Leiterplattenbereich verbunden ist. Durch das flexible streifenförmige Leiterplattenteilelement kann das zweite Wandlerelement vielfältig zu dem ersten Wandlerelement ausgerichtet werden. Dadurch kann ein Winkel zwischen dem ersten Wandlerelement und dem zweiten Wandlerelement wie gewünscht eingestellt werden. Weiterhin kann das zweite Wandlerelement durch das flexible streifenförmige erste Leiterplattenteilelement auch an Kraftfahrzeugbauteilen mit einer komplexen Kontur oder einer starken Krümmungen angeordnet werden. Das Leiterplattenhauptelement kann beispielsweise kreisscheibenförmig ausgebildet sein und als flexible oder starre Leiterplatte vorliegen.

In einer weiteren erfindungsgemäßen Variante ist es vorgesehen, dass die Leiterplatte zumindest ein flexibles streifenförmiges erstes Leiterplattenteilelement als den zweiten Leiterplattenbereich aufweist, welches mit einem außerhalb des ersten Leiterplattenbereichs und des zweiten Leiterplattenbereichs angeordneten Leiterplattenhauptelement der Leiterplatte verbunden ist, und die Leiterplatte ein flexibles streifenförmiges zweites Leiterplattenteilelement als den ersten Leiterplattenbereich aufweist, welches mit dem Leiterplattenhauptelement verbunden ist. Das Leiterplattenhauptelement ist dann beispielsweise als dritter Leiterplattenbereich ausgebildet. Dadurch ist dann das zweite Wandlerelement auf dem ersten Leiterplattenteilelement angeordnet und das erste Wandlerelement ist auf dem zweiten Leiterplattenteilelement angeordnet. Optional kann auf dem Leiterplattenhauptelement ein drittes Wandlerelement angeordnet sein. Durch das flexible streifenförmige erste Leiterplattenteilelement und das flexible streifenförmige zweite Leiterplattenteilelement können die Wandlerelemente flexibler zueinander ausgerichtet werden, wodurch der Umgebungsbereich des Kraftfahrzeugs präziser erfasst werden kann. Weiterhin lassen sich die Wandlerelemente durch die flexiblen streifenförmigen Leiterplattenteilelemente auch an Kraftfahrzeugbauteilen mit komplexen Konturen in vielfältiger Weise anordnen.

Insbesondere ist es vorgesehen, dass zumindest eines der Wandlerelemente an einer dem Leiterplattenhauptelement abgewandten Seite des jeweiligen Leiterplattenteilelements angeordnet ist. Dadurch kann die Positionierung der Wandlerelemente wiederum vielfältiger an dem Kraftfahrzeugbauteil erfolgen, da die Freiheit bei der Positionierung durch den größeren Abstand zwischen den Wandlerelementen und dem Leiterplattenhauptelement erhöht wird.

Erfindungsgemäß ist es vorgesehen, dass die Leiterplatte zumindest ein flexibles streifenförmiges drittes Leiterplattenteilelement als dritten Leiterplattenbereich umfasst, welches an einer dem Leiterplattenhauptelement abgewandten Seite eine Schnittstelle zum Anschluss an das Kraftfahrzeug aufweist und ohne Wandlerelement ausgebildet ist. Dadurch kann die Ultraschallsensorvorrichtung auch an unzugänglichen Stellen des Kraftfahrzeugbauteils angeordnet werden und dennoch zuverlässig mit dem Kraftfahrzeug verbunden werden. Vorzugsweise wird die gesamte Ultraschallvorrichtung und somit sämtliche Wandlerelemente der Ultraschallsensorvorrichtung über die Schnittstelle an das Kraftfahrzeug angeschlossen. Es ist somit auch für mehrere Wandlerelemente nur eine Schnittstelle zum Anschluss an das Kraftfahrzeug notwendig. Dadurch kann die Ultraschallsensorvorrichtung bauteilärmer und effektiver an das Kraftfahrzeug angeschlossen werden.

In einer weiteren Ausführungsform ist es vorzugsweise vorgesehen, dass die Leiterplatte als zusammenhängende Fläche mit runder Außenkontur oder mit eckiger Außenkontur ausgebildet ist, und ein als der erste Leiterplattenbereich ausgebildetes Leiterplattenhauptelement der Leiterplatte von einem als der zweite Leiterplattenbereich ausgebildeten Leiterplattenrahmenelement der Leiterplatte vollständig umrahmt ist. Dadurch ist auf dem Leiterplattenhauptelement das erste Wandlerelement angeordnet und auf dem Leiterplattenrahmenelement ist zumindest das zweite Wandlerelement angeordnet. Das Leiterplattenhauptelement kann dabei beispielsweise starr oder flexibel ausgebildet sein. Durch die Anordnung des zweiten Leiterplattenhauptelements auf dem Leiterplattenrahmenelement kann das zweite Wandlerelement wiederum in vielfältiger Weise zu dem ersten Wandlerelement hin ausgerichtet werden. Der Umgebungsbereich des Kraftfahrzeugs kann dadurch präziser erfasst werden. Zudem kann die Ultraschallsensorvorrichtung auch wiederum einfacher an Kraftfahrzeugbauteilen mit einer komplexen Geometrie angeordnet werden. Weiterhin vorteilhaft an der Ultraschallsensorvorrichtung mit dem Leiterplattenrahmenelement ist beispielsweise, dass das Leiterplattenrahmenelement durch die ringförmige Ausgestaltung kompakt und robust ausgebildet ist. Weiterhin wird durch das Leiterplattenrahmenelement eine größere Oberfläche für die Anordnung von mehreren Wandlerelementen bereitgestellt.

In einer weiteren Ausführungsform ist es vorzugsweise vorgesehen, dass die Leiterplatte als zusammenhängende Fläche mit runder Außenkontur oder mit eckiger Außenkontur ausgebildet ist, und ein außerhalb des ersten Leiterplattenbereichs und des zweiten Leiterplattenbereichs angeordnetes Leiterplattenhauptelement der Leiterplatte von einem als der erste Leiterplattenbereich und der zweite Leiterplattenbereich ausgebildeten Leiterplattenrahmenelement der Leiterplatte vollständig umrahmt ist. Vorzugsweise ist auf dem Leiterplattenhauptelement kein Wandlerelement angeordnet. Das erste Wandlerelement und zumindest das zweite Wandlerelement sind auf dem Leiterplattenrahmenelement angeordnet. Dadurch sind die Wandlerelemente dann insbesondere nur auf dem flexibel ausgebildeten Bereich der Leiterplatte angeordnet. Vorteilhaft ist daran, dass eine beispielsweise auf dem Leiterplattenhauptelement angeordnete Steuerelektronik der Ultraschallsensorvorrichtung vor dem Einfluss einer durch die Wandlerelemente entstehenden Schwingung bewahrt werden kann. Dadurch kann die Ultraschallsensorvorrichtung genauer und zuverlässiger betrieben werden. Weiterhin ist es vorzugsweise vorgesehen, dass eine Mehrzahl von mehr als zwei Wandlerelementen der Ultraschallsensorvorrichtung auf dem Leiterplattenrahmenelement angeordnet ist, und die Wandlerelemente symmetrisch auf einer um eine Längsachse der Leiterplatte umlaufenden Kreisbahn oder spiralförmig auf einer Spiralbahn mit der Längsachse als Ursprung der Spiralbahn angeordnet sind. Dadurch kann die Ortsauflösung der Ultraschallsensorvorrichtung weiterhin erhöht werden. Der Umgebungsbereich des Kraftfahrzeugs kann dadurch also präziser erfasst werden. Durch die Mehrzahl der Wandlerelemente kann die Position eines Objekts im Umgebungsbereich genauer bestimmt werden. Es kann somit bestimmt werden, ob das Objekt in einem relevanten Bereich liegt und somit beispielsweise ein Hindernis für das Kraftfahrzeug darstellt, oder ob das Objekt ausgeblendet werden soll, da es außerhalb des relevanten Bereichs liegt. Durch das Anordnen der Wandlerelemente in symmetrischer Form oder in Spiralform kann die Ultraschallsensorvorrichtung für vielfältige Anforderungen und komplexe Kraftfahrzeugbauteilformen bereitgestellt werden. Durch die in vielfältiger Weise mögliche Anordnung der Wandlerelemente auf der Leiterplatte, beispielsweise symmetrisch auf der Kreisbahn oder spiralförmig auf der Spiralbahn, kann jeweils ein unterschiedliches Interferenzbild des Ultraschallsignals der Ultraschallsensorvorrichtung bereitgestellt werden. Das Interferenzbild kann dann beispielsweise derart gewählt werden, dass der Umgebungsbereich genauer und zuverlässiger erfasst wird.

Insbesondere ist es vorgesehen, dass eine Steuerelektronik der Ultraschallsensorvorrichtung, welche mit dem ersten Wandlerelement und/oder mit dem zweiten Wandlerelement elektrisch verbunden ist, auf dem Leiterplattenhauptelement angeordnet ist. Durch die Anordnung der Steuerelektronik auf dem Leiterplattenhauptelement kann diese mit jedem der Wandlerelemente auf kurzem Weg verbunden werden. Weiterhin können die Wandlerelemente derart beabstandet von der Steuerelektronik auf der Leiterplatte angeordnet werden, dass eine Schwingung der Wandlerelemente nicht auf die Steuerelektronik übertragen wird. Insbesondere teilen sich das erste Wandlerelement und das zweite Wandlerelement die Steuerelektronik. Die Ultraschallsensorvorrichtung kann dadurch bauteilärmer und effektiver ausgebildet werden, als wenn jedes Wandlerelement eine eigene Steuerelektronik aufweisen würde.

Weiterhin kann es vorgesehen sein, dass das Leiterplattenhauptelement starr ausgebildet ist. So kann das Leiterplattenhauptelement starr ausgebildet sein, während das Leiterplattenrahmenelement flexibel ausgebildet ist. Vorteilhaft ist beispielsweise, dass durch das starr ausgebildete Leiterplattenhauptelement eine einfache Möglichkeit zur Anordnung der Steuerelektronik auf dem Leiterplattenhauptelement bereitgestellt wird. Die Ultraschallsensorvorrichtung kann dadurch beispielsweise auch robuster bereitgestellt werden.

Insbesondere ist es vorgesehen, dass in einem äußeren Randbereich der Leiterplatte ein Befestigungselement, insbesondere ein Kleberand, zur Befestigung an dem Kraftfahrzeug angeordnet ist. Der Kleberand kann beispielsweise vollständig umlaufend um einen äußeren Rand des Leiterplattenrahmenelements angeordnet sein. Der Kleberand kann aber beispielsweise auch an der dem Leiterplattenhauptelement abgewandten Seite des ersten und/oder des zweiten Leiterplattenteilelements angeordnet sein. Durch das Befestigungselement kann die Ultraschallsensorvorrichtung einfach und platzsparend an dem Kraftfahrzeugbauteil befestigt werden. Durch den Kleberand kann beispielsweise auch eine Befestigung der Ultraschallsensorvorrichtung an schwer zugänglichen Stellen des Kraftfahrzeugbauteils erfolgen.

Die Erfindung betrifft auch eine Ultraschallsensoranordnung mit zumindest einer an einem Kraftfahrzeugbauteil eines Kraftfahrzeugs angeordneten erfindungsgemäßen Ultraschallsensorvorrichtung .

Insbesondere ist es vorgesehen, dass eine zumindest bereichsweise flexible Leiterplatte der Ultraschallsensorvorrichtung mit einer auf der Leiterplatte angeordneten Steuerelektronik der Ultraschallsensorvorrichtung unmittelbar an dem Kraftfahrzeugbauteil anliegend angeordnet ist. So ist bei der Ultraschallsensorvorrichtung neben zumindest zwei Wandlerelementen der Ultraschallsensorvorrichtung auch die Leiterplatte mit der Steuerelektronik unmittelbar an einer Innenseite des Kraftfahrzeugbauteils, beispielsweise eines Verkleidungsteils, angeordnet. Dies hat eine platzsparende Wirkung und ermöglicht das Anordnen der Ultraschallsensorvorrichtung in vielfältiger Weise an dem Kraftfahrzeugbauteil. Auch kann die Ultraschallsensorvorrichtung dadurch an Kraftfahrzeugbauteilen mit einer komplexen Geometrie, beispielsweise starken Krümmungen, einfacher angeordnet werden.

Weiterhin ist es vorzugsweise vorgesehen, dass die Ultraschallsensorvorrichtung auf einer dem Kraftfahrzeugbauteil abgewandten Seite zumindest teilweise mit einem Schutzelement umgeben ist. Das Schutzelement kann beispielsweise als Schutzfolie ausgebildet sein. Durch das Schutzelement wird die Ultraschallsensorvorrichtung beispielsweise gegenüber dem Einfluss von Staub oder Feuchtigkeit geschützt. Die Ultraschallsensorvorrichtung kann also auf einer dem Kraftfahrzeugbauteil zugewandten Seite von dem Kraftfahrzeugbauteil selbst geschützt sein und auf der dem Kraftfahrzeugbauteil abgewandten Seite kann die Ultraschallsensorvorrichtung durch das Schutzelement geschützt werden. Das Schutzelement kann beispielsweise mit einem am äußeren Rand des Schutzelements umlaufenden Klebestreifen auf das Kraftfahrzeugbauteil aufgeklebt werden.

Weiterhin kann es vorgesehen sein, dass die Ultraschallsensoranordnung zusätzlich zu der ersten Ultraschallsensorvorrichtung eine zweite Ultraschallsensorvorrichtung umfasst, und die erste Ultraschallsensorvorrichtung mit der zweiten Ultraschallsensorvorrichtung, insbesondere drahtlos gekoppelt ist. Die Kopplung der ersten Ultraschallsensorvorrichtung mit der zweiten Ultraschallsensorvorrichtung kann beispielsweise kabelgebunden oder drahtlos erfolgen. Vorteilhaft ist, dass dadurch mehrere Ultraschallsensorvorrichtungen in einfacher Weise kombiniert werden können. So kann der Anschluss der Ultraschallsensoranordnung beispielsweise lediglich über die erste Ultraschallsensorvorrichtung an das Kraftfahrzeug erfolgen, während die zweite Ultraschallsensorvorrichtung über die erste Ultraschallsensorvorrichtung an das Kraftfahrzeug angebunden ist. Dadurch wird die Ultraschallsensoranordnung effektiv und funktionsreich bereitgestellt.

Die Erfindung betrifft auch ein Kraftfahrzeug mit einer erfindungsgemäßen Ultraschallsensoranordnung.

Weitere Merkmale der Erfindung ergeben sich aus den Ansprüchen. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Dabei zeigen:
- Fig. 1: eine schematische Draufsicht auf ein erfindungsgemäßes Kraftfahrzeug mit einer Ultraschallsensoranordnung;
- Fig. 2: eine schematische Darstellung einer erfindungsgemäßen Ultraschallsensorvorrichtung der Ultraschallsensoranordnung;
- Fig. 3: eine schematische Darstellung eines weiteren Ausführungsbeispiels der Ultraschallsensorvorrichtung ;
- Fig. 4: eine schematische Darstellung eines weiteren Ausführungsbeispiels der Ultraschallsensorvorrichtung mit einem Leiterplattenhauptelement und einem Leiterplattenrahmenelement, wobei Wandlerelemente der Ultraschallsensorvorrichtung symmetrisch auf einer Kreisbahn angeordnet sind;
- Fig. 5: eine schematische Darstellung eines weiteren Ausführungsbeispiels der Ultraschallsensorvorrichtung, bei welcher die Wandlerelemente rasterartig auf dem Leiterplattenrahmenelement angeordnet sind;
- Fig. 6: eine schematische Darstellung eines weiteren Ausführungsbeispiels der Ultraschallsensorvorrichtung, bei welcher die Wandlerelemente spiralförmig auf einer Spiralbahn auf der Leiterplatte angeordnet sind;
- Fig. 7: eine schematische Darstellung der Ultraschallsensoranordnung, bei welcher eine Steuerelektronik der Ultraschallsensorvorrichtung unmittelbar anliegend an einem Kraftfahrzeugbauteil des Kraftfahrzeugs angeordnet ist;
- Fig. 8: eine schematische Darstellung der Ultraschallsensoranordnung, bei welcher die Ultraschallsensorvorrichtung mit einem Schutzelement umgeben ist;
- Fig. 9: eine schematische Darstellung eines in verdeckter Verbauweise an dem Kraftfahrzeugbauteil angeordneten Wandlerelements der Ultraschallsensorvorrichtung ;
- Fig. 10: eine schematische Darstellung eines in verdeckter Verbauweise mittels eines Zwischenelements an dem Kraftfahrzeugbauteil angeordneten Wandlerelements der Ultraschallsensorvorrichtung; und
- Fig. 11: eine schematische Darstellung eines in unverdeckter Verbauweise angeordneten Wandlerelements der Ultraschallsensorvorrichtung.

In den Figuren werden gleiche oder funktionsgleiche Elemente mit den gleichen Bezugszeichen versehen.

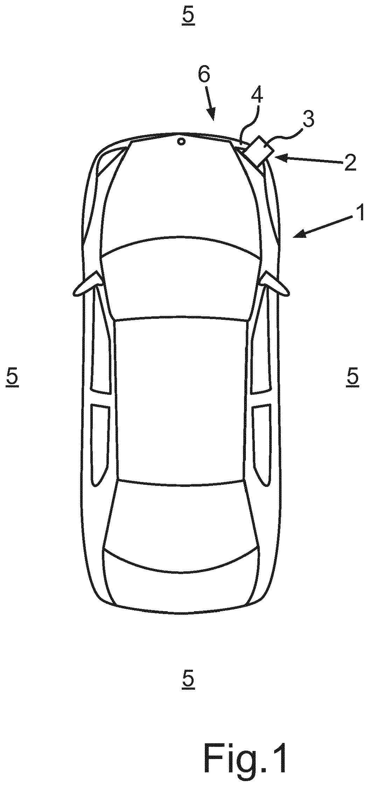

In Fig. 1 ist schematisch eine Draufsicht auf ein Kraftfahrzeug 1 mit einer Ultraschallsensoranordnung 2 gezeigt. Die Ultraschallsensoranordnung 2 umfasst eine Ultraschallsensorvorrichtung 3, welche an einem Kraftfahrzeugbauteil 4 des Kraftfahrzeugs 1 angeordnet ist. Das Kraftfahrzeugbauteil 4 kann dabei beispielsweise als Verkleidungsteil des Kraftfahrzeugs 1, wie beispielsweise ein Stoßfänger, vorliegen. Die Anordnung der Ultraschallsensorvorrichtung 3 an dem Kraftfahrzeug 1 ist vielfältig möglich, vorzugsweise allerdings so, dass ein Umgebungsbereich 5 des Kraftfahrzeugs 1 mit der Ultraschallsensorvorrichtung 3 zumindest teilweise erfasst werden kann. Vorliegend ist die Ultraschallsensorvorrichtung 3 an einer Front 6 des Kraftfahrzeugs 1 angeordnet.

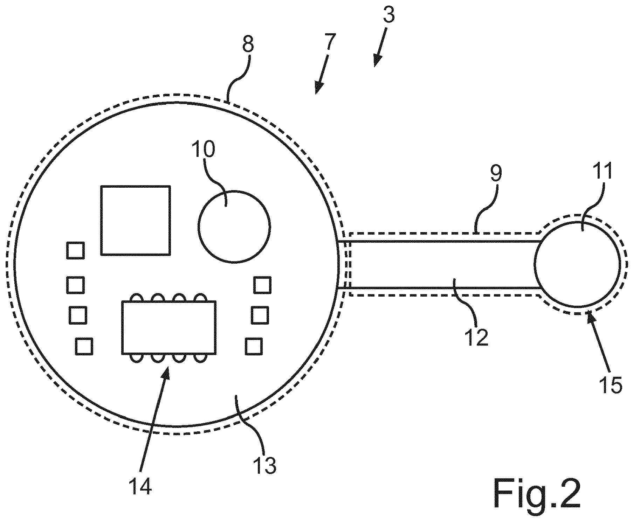

Fig. 2 zeigt eine schematische Darstellung eines Ausführungsbeispiels der Ultraschallsensorvorrichtung 3. Die Ultraschallsensorvorrichtung 3 umfasst eine Leiterplatte 7 mit einem ersten Leiterplattenbereich 8 und einem zweiten Leiterplattenbereich 9. In dem ersten Leiterplattenbereich 8 ist ein erstes Wandlerelement 10 angeordnet. In dem zweiten Leiterplattenbereich 9 ist ein zweites Wandlerelement 11 angeordnet. Sowohl das erste Wandlerelement 10 als auch das zweite Wandlerelement 11 sind zum Aussenden und/oder Empfangen von Ultraschallsignalen ausgebildet. Der zweite Leiterplattenbereich 9 ist ausgebildet als ein flexibles streifenförmiges erstes Leiterplattenteilelement 12 der Leiterplatte 7. Der erste Leiterplattenbereich 8 ist als Leiterplattenhauptelement 13 der Leiterplatte 7 ausgebildet. Somit ist das zweite Wandlerelement 11 auf dem Leiterplattenteilelement 12 angeordnet und das erste Wandlerelement 10 ist auf dem Leiterplattenhauptelement 13 angeordnet. Auf dem Leiterplattenhauptelement 13 ist zudem noch eine Steuerelektronik 14 der Ultraschallsensorvorrichtung 3 angeordnet. Weiterhin ist das zweite Wandlerelement 11 auf einer dem Leiterplattenhauptelement 13 abgewandten Seite 15 des Leiterplattenteilelements 12 angeordnet.

Das Leiterplattenteilelement 12 ist aus einer flexiblen Leiterplatte beziehungsweise einer flexiblen Leiterbahn ausgebildet und kann dadurch in vielfältiger Weise gebogen werden. Das erste Wandlerelement 10 und/oder das zweite Wandlerelement 11 sind vorzugsweise als Piezoelement ausgebildet. Durch die Wandlerelemente 10, 11 werden Ultraschallsignale beziehungsweise Ultraschallwellen in den Umgebungsbereich 5 des Kraftfahrzeugs 1 ausgesendet und/oder aus dem Umgebungsbereich 5 empfangen. Dadurch kann dann beispielsweise ein Abstand zu einem Objekt in dem Umgebungsbereich 5 des Kraftfahrzeugs 1 bestimmt werden. Durch die zwei Wandlerelemente 10, 11 kann eine mehrdimensionale Position des Objekts in dem Umgebungsbereich 5 bestimmt werden.

Das Leiterplattenhauptelement 13 kann beispielsweise starr oder flexibel ausgebildet sein.

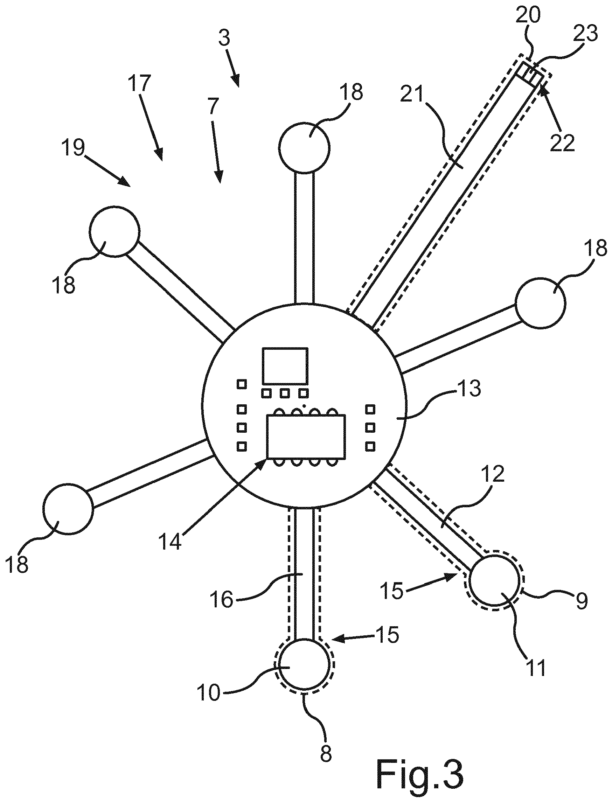

Fig. 3 zeigt ein weiteres Ausführungsbeispiel der Ultraschallsensorvorrichtung 3. Der zweite Leiterplattenbereich 9 ist als das flexible streifenförmige erste Leiterplattenteilelement 12 ausgebildet und der erste Leiterplattenbereich 8 ist als ein flexibles streifenförmiges zweites Leiterplattenteilelement 16 ausgebildet. Auf dem ersten Leiterplattenteilelement 12 ist das zweite Wandlerelement 11 angeordnet. Auf dem zweiten Leiterplattenteilelement 16 ist das erste Wandlerelement 10 angeordnet. Die Leiterplattenteilelemente 12, 16 sind an das außerhalb des ersten Leiterplattenbereichs 8 und des zweiten Leiterplattenbereichs 9 angeordneten Leiterplattenhauptelement 13 angebunden.

An das Leiterplattenhauptelement 13 ist eine Mehrzahl von flexiblen streifenförmigen Leiterplattenteilelementen 17 angeordnet. Auf jedem Leiterplattenteilelement der Mehrzahl der Leiterplattenteilelemente 17 ist gemäß dem Ausführungsbeispiel ein weiteres Wandlerelement 18 einer Mehrzahl von Wandlerelementen 19 angeordnet.

Die Mehrzahl der Leiterplattenteilelemente 17 ist vorzugsweise derart an dem Leiterplattenhauptelement 13 angeordnet sein, dass die Leiterplattenteilelemente sternförmig um das Leiterplattenhauptelement 13 herum angeordnet sind.

Die Steuerelektronik 14 ist auf dem Leiterplattenhauptelement 13 angeordnet. Das Leiterplattenhauptelement 13 ist vorliegend ohne Wandlerelement ausgebildet. In einem nicht weiter dargestellten Ausführungsbeispiel kann jedoch auch ein Wandlerelement auf dem Leiterplattenhauptelement 13 angeordnet sein.

An das Leiterplattenhauptelement 13 ist als dritten Leiterplattenbereich 20 der Leiterplatte 7 ein flexibles streifenförmiges drittes Leiterplattenteilelement 21 angeordnet. Das dritte Leiterplattenteilelement 21 ist ohne Wandlerelement ausgebildet. Auf einer dem Leiterplattenhauptelement 13 abgewandten Seite 22 des dritten Leiterplattenteilelements 21 ist eine Schnittstelle 23 der Ultraschallsensorvorrichtung 3 ausgebildet. Die Schnittstelle 23 dient zum Anschluss der Ultraschallsensorvorrichtung 3 an das Kraftfahrzeug 1. Beispielsweise kann die Ultraschallsensorvorrichtung 3 über die Schnittstelle 23 an eine Steuereinheit des Kraftfahrzeugs 1 angeschlossen werden.

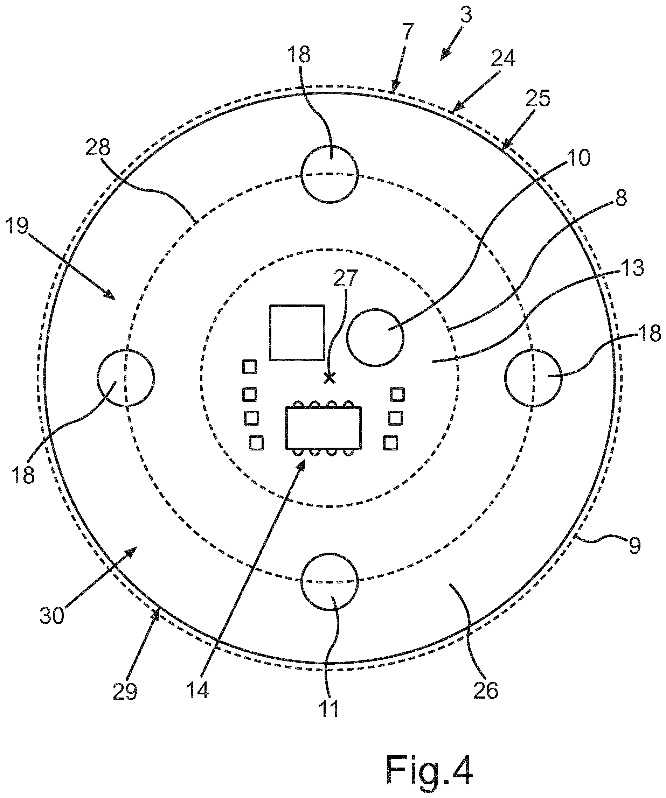

Fig. 4 zeigt ein weiteres Ausführungsbeispiel der Ultraschallsensorvorrichtung 3. Die Leiterplatte 7 ist als zusammenhängende Fläche 24 mit einer runden Außenkontur 25 ausgebildet. Der erste Leiterplattenbereich 8 ist als Leiterplattenhauptelement 13 ausgebildet. Auf dem Leiterplattenhauptelement 13 ist das erste Wandlerelement 10 angeordnet. Weiterhin ist auf dem Leiterplattenhauptelement 13 die Steuerelektronik 14 angeordnet.

Der zweite Leiterplattenbereich 9 ist als Leiterplattenrahmenelement 26 ausgebildet. Das Leiterplattenrahmenelement 26 umrahmt das Leiterplattenhauptelement 13 vollständig. Auf dem Leiterplattenrahmenelement 26 ist das zweite Wandlerelement 11 und weitere Wandlerelemente 18 der Mehrzahl der Wandlerelemente 19 angeordnet. Der zweite Leiterplattenbereich 9 ist als das Leiterplattenrahmenelement 26 ausgebildet.

Die Wandlerelemente 11, 18 sind auf dem Leiterplattenrahmenelement 26 symmetrisch auf einer um eine Längsachse 27 der Leiterplatte 7 umlaufende Kreisbahn 28 angeordnet.

In einem äußeren Randbereich 29 der Leiterplatte 7 ist ein Befestigungselement 30 zur Befestigung an dem Kraftfahrzeug 1 angeordnet. Das Befestigungselement 30 ist beispielsweise als Kleberand ausgebildet. Der Kleberand kann dabei vollständig um die Längsachse 27 umlaufend an der Leiterplatte 7 ausgebildet sein.

In einem nicht weiter dargestellten Ausführungsbeispiel analog zu Fig. 4 ist das erste Wandlerelement 10 nicht auf dem Leiterplattenhauptelement 13 angeordnet, sondern ebenso wie das zweite Wandlerelement 11 auf dem Leiterplattenrahmenelement 26. Das Leiterplattenrahmenelement 26 weist somit den ersten Leiterplattenbereich 8 und den zweiten Leiterplattenbereich 9 auf. Dadurch kann das Leiterplattenhauptelement 13 auch ohne entsprechendes Wandlerelement bereitgestellt werden.

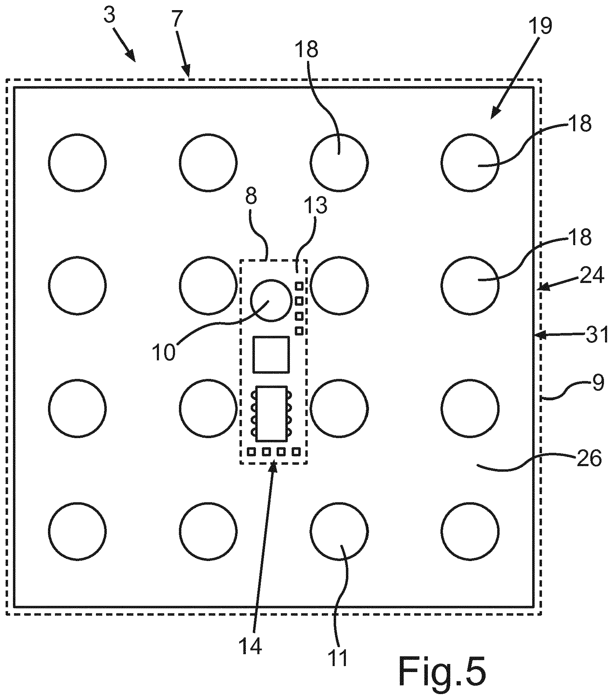

Fig. 5 zeigt ein weiteres Ausführungsbeispiel der Ultraschallsensorvorrichtung 3. Der erste Leiterplattenbereich 8 ist als das Leiterplattenhauptelement 13 ausgebildet. Der zweite Leiterplattenbereich 9 ist als das Leiterplattenrahmenelement 26 ausgebildet. Die Leiterplatte 7 ist als zusammenhänge Fläche 24 mit eckiger Außenkontur 31 ausgebildet. Der erste Leiterplattenbereich 8 ist als Leiterplattenhauptelement 13 ausgebildet. Der zweite Leiterplattenbereich 9 ist als das Leiterplattenrahmenelement 26 ausgebildet. Auf dem Leiterplattenhauptelement 13 ist das erste Wandlerelement 10 angeordnet. Weiterhin ist auf dem Leiterplattenhauptelement 13 die Steuerelektronik 14 angeordnet. Auf dem Leiterplattenrahmenelement 26 ist das zweite Wandlerelement 11 und die weiteren Wandlerelemente 18 der Mehrzahl der Wandlerelemente 19 angeordnet. Die Wandlerelemente 11, 18 auf dem Leiterplattenrahmenelement 26 sind rasterartig beziehungsweise gitterartig angeordnet.

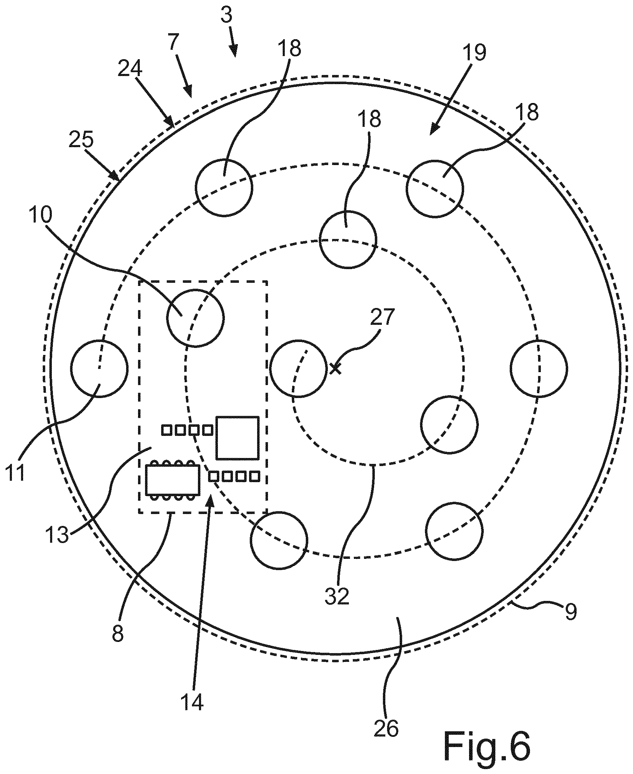

Fig. 6 zeigt die Ultraschallsensorvorrichtung 3 analog Fig. 4. Das erste Wandlerelement 10, das zweite Wandlerelement 11 und die weiteren Wandlerelemente 18 der Mehrzahl der Wandlerelemente 19 sind spiralförmig auf einer Spiralbahn 32 mit der Längsachse 27 als Ursprung der Spiralbahn 32 angeordnet.

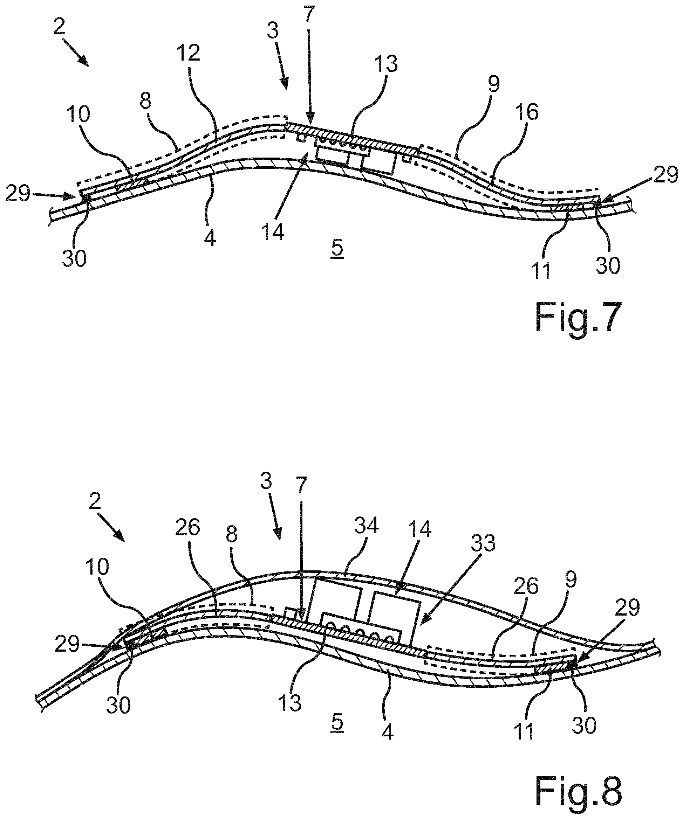

Fig. 7 zeigt die Ultraschallsensoranordnung 2. An dem Kraftfahrzeugbauteil 4 ist die Ultraschallsensorvorrichtung 3 angeordnet. Das Kraftfahrzeugbauteil 4 kann dabei als gekrümmtes Verkleidungsteil des Kraftfahrzeugs 1 ausgebildet sein. Die Ultraschallsensorvorrichtung 3 weist dabei den ersten Leiterplattenbereich 8 und den zweiten Leiterplattenbereich 9 als das Leiterplattenrahmenelement 26 auf. Das Leiterplattenhauptelement 13 liegt gemäß dem Ausführungsbeispiel außerhalb des ersten Leiterplattenbereichs 8 und des zweiten Leiterplattenbereichs 9. Auf dem Leiterplattenhauptelement 13 ist die Steuerelektronik 14 angeordnet. Auf dem Leiterplattenrahmenelement 26 sind das erste Wandlerelement 10 und das zweite Wandlerelement 11 angeordnet. Die Ultraschallsensorvorrichtung 3 ist über das Befestigungselement 30 an dem Kraftfahrzeugbauteil 4 befestigt. Das Befestigungselement 30 ist an dem äußeren Randbereich 29 des Leiterplattenrahmenelements 26 angeordnet. Das Befestigungselement 30 ist beispielsweise als Kleberand ausgebildet. Gemäß dem Ausführungsbeispiel ist die Ultraschallsensorvorrichtung 3 mit der Leiterplatte 7 und der darauf angeordneten Steuerelektronik 14 unmittelbar mit dem Kraftfahrzeugbauteil 4 anliegend angeordnet. Die Leiterplatte 7 kann durch die bereichsweise Flexibilität an eine Krümmung des Kraftfahrzeugbauteils 4 angepasst werden.

Fig. 8 zeigt die Ultraschallsensoranordnung 2 analog zu Fig. 7. Ergänzend zu dem Ausführungsbeispiel von Fig. 7 ist die Ultraschallsensorvorrichtung 3 auf einer dem Kraftfahrzeugbauteil 4 abgewandten Seite 33 mit einem Schutzelement 34 umgeben. Das Schutzelement 34 kann dabei beispielsweise als Schutzfolie ausgebildet sein. Das Schutzelement 34 schützt die Ultraschallsensorvorrichtung 3 beispielsweise vor Verschmutzung oder vielfältigen mechanischen Einwirkungen. Gemäß dem Ausführungsbeispiel von Fig. 8 ist die Ultraschallsensorvorrichtung 3 auf der dem Kraftfahrzeugbauteil 4 abgewandten Seite 33 vollständig von dem Schutzelement 34 umgeben.

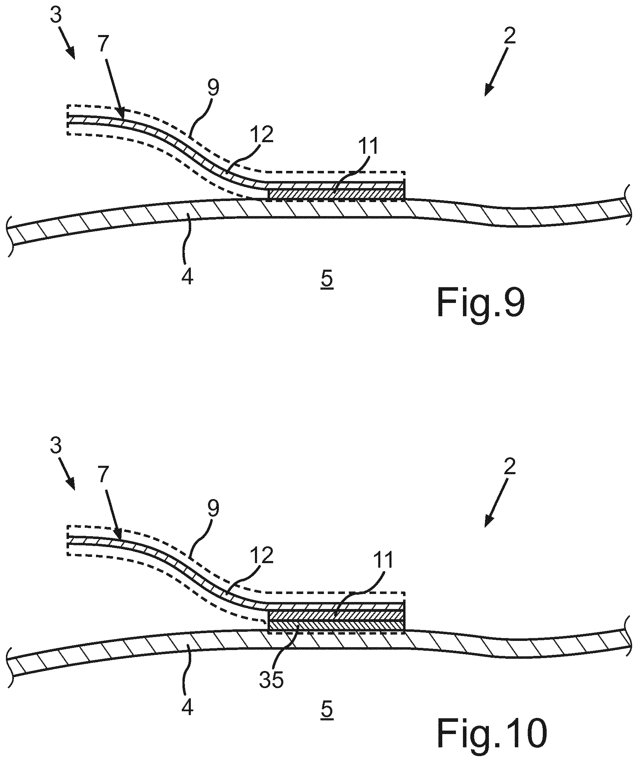

Fig. 9 zeigt einen Teil der Ultraschallsensoranordnung 2. Das zweite Wandlerelement 11 ist direkt auf dem Kraftfahrzeugbauteil 4 angebracht. Das Kraftfahrzeugbauteil 4 ist vorliegend aus Blech ausgebildet. Das zweite Wandlerelement 11 ist auf dem ersten Leiterplattenteilelement 12 angeordnet. Das Kraftfahrzeugbauteil 4 kann beispielsweise als Türe des Kraftfahrzeugs 1 ausgebildet sein.

Fig. 10 zeigt die Ultraschallsensoranordnung 2 analog zu Fig. 9, wobei das Kraftfahrzeugbauteil 4 aus Kunststoff ausgebildet ist. Das Kraftfahrzeugbauteil 4 kann beispielsweise in Form eines Stoßfängers vorliegen. Die Kontaktierung des zweiten Wandlerelements 11 erfolgt nun mittels eines Zwischenelements 35, welches zwischen dem zweiten Wandlerelement 11 und dem Kraftfahrzeugbauteil 4 angeordnet ist. Das Zwischenelement 35 ist beispielsweise als Aluminiumscheibe ausgebildet. Das Ultraschallsignal des zweiten Wandlerelements 11 kann dadurch effektiver durch das Kraftfahrzeugbauteil 4 hindurch geschickt werden, um sich in dem Umgebungsbereich 5 auszubreiten.

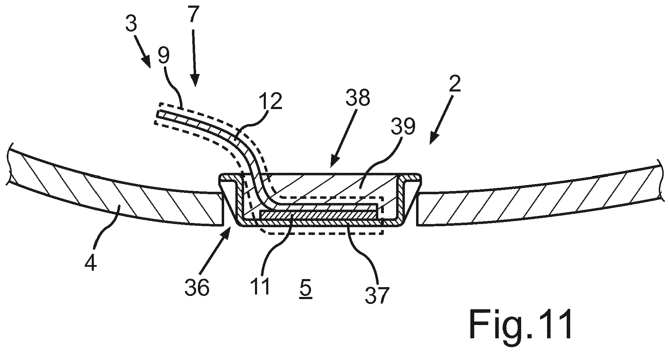

Fig. 11 zeigt ein weiteres Ausführungsbeispiel der Ultraschallsensoranordnung 2. Die Ultraschallsensorvorrichtung 3 ist im Gegensatz zu Fig. 9 und Fig. 10 nun nicht mehr verdeckt, sondern teilweise offen verbaut. So weist das Kraftfahrzeugbauteil 4 eine Öffnung 36 auf. Durch die Öffnung 36 erstreckt sich ein Topfelement 37. Das Topfelement 37 kann beispielsweise aus Aluminium ausgebildet sein. In dem Topfelement 37 ist auf einer dem Umgebungsbereich 5 abgewandten Seite 38 das zweite Wandlerelement 11 angeordnet. Das zweite Wandlerelement 11 ist auf der dem Topfelement 37 gegenüberliegenden Seite auf dem ersten Leiterplattenteilelement 12 angeordnet. Weiterhin wird das zweite Wandlerelement 11 von einem Dämpfungselement 39 umgeben. Das Dämpfungselement 39 kann dabei beispielsweise aus Schaum oder einer Verdämpfungsfolie oder einem sonstigen Vergußmaterial ausgebildet sein. Durch das Dämpfungselement 39 kann die Schwingung des zweiten Wandlerelements 11 gedämpft und dadurch effektiver kontrolliert werden.

## Patentansprüche

1. Ultraschallsensorvorrichtung (3) für ein Kraftfahrzeug (1), mit einer zumindest bereichsweise flexibel ausgebildeten Leiterplatte (7) mit einem ersten Leiterplattenbereich (8), auf welchem ein Wandlerelement (10) angeordnet ist, welches zum Aussenden und/oder Empfangen von Ultraschallsignalen ausgebildet ist, wobei
die Leiterplatte (7) an dem ersten Leiterplattenbereich (8) und/oder an einem zweiten Leiterplattenbereich (9) flexibel ausgebildet ist, und an dem zweiten Leiterplattenbereich (9) ein zu dem ersten Wandlerelement (10) separates zweites Wandlerelement (11) der Ultraschallsensorvorrichtung (3) angeordnet ist, welches zum Aussenden und/oder Empfangen von Ultraschallsignalen ausgebildet ist, und wobei die Leiterplatte (7) zumindest ein flexibles streifenförmiges erstes Leiterplattenteilelement (12) als den zweiten Leiterplattenbereich (9) aufweist, welches mit einem Leiterplattenhauptelement (13) der Leiterplatte (7) als den ersten
Leiterplattenbereich (8) verbunden ist oder welches mit einem außerhalb des ersten Leiterplattenbereichs (8) und des zweiten Leiterplattenbereichs (9) angeordneten Leiterplattenhauptelement (13) der Leiterplatte (7) verbunden ist, und die Leiterplatte (7) ein flexibles streifenförmiges zweites Leiterplattenteilelement (16) als den ersten Leiterplattenbereich (8) aufweist, welches mit dem Leiterplattenhauptelement (13) verbunden ist, **dadurch gekennzeichnet, dass** die Leiterplatte (7) zumindest ein flexibles streifenförmiges drittes Leiterplattenteilelement (21) als dritten Leiterplattenbereich (20) umfasst, welches an einer dem Leiterplattenhauptelement (13) abgewandten Seite (22) eine Schnittstelle (23) zum Anschluss an das Kraftfahrzeug (1) aufweist und ohne Wandlerelement ausgebildet ist.

2. Ultraschallsensorvorrichtung (3) nach Anspruch 1,
**dadurch gekennzeichnet, dass**
zumindest eines der Wandlerelemente (10, 11) an einer dem Leiterplattenhauptelement (13) abgewandten Seite (15) des jeweiligen Leiterplattenteilelements (12, 16) angeordnet ist.

3. Ultraschallsensorvorrichtung (3) nach Anspruch 1 oder 2,
**dadurch gekennzeichnet, dass**
eine Steuerelektronik (14) der Ultraschallsensorvorrichtung (3), welche mit dem ersten Wandlerelement (10) und/oder mit dem zweiten Wandlerelement (11) elektrisch verbunden ist, auf dem Leiterplattenhauptelement (13) angeordnet ist.

4. Ultraschallsensorvorrichtung (3) nach einem der Ansprüche 1 bis 3,
**dadurch gekennzeichnet, dass**
das Leiterplattenhauptelement (13) starr ausgebildet ist.

5. Ultraschallsensorvorrichtung (3) nach einem der vorhergehenden Ansprüche,
**dadurch gekennzeichnet, dass**
in einem äußeren Randbereich (29) der Leiterplatte (7) ein Befestigungselement (30), insbesondere ein Kleberand, zur Befestigung an dem Kraftfahrzeug (1) angeordnet ist.

6. Ultraschallsensoranordnung (2) mit einem Befestigungselement (30) und zumindest einer an einem Kraftfahrzeugbauteil
(4) eines Kraftfahrzeugs (1) angeordneten Ultraschallsensorvorrichtung (3) nach einem der vorhergehenden Ansprüche.

7. Ultraschallsensoranordnung (2) nach Anspruch 6,
**dadurch gekennzeichnet, dass**
eine zumindest bereichsweise flexible Leiterplatte (7) der Ultraschallsensorvorrichtung (3) mit einer auf der Leiterplatte (7) angeordneten Steuerelektronik (14) der Ultraschallsensorvorrichtung (3) unmittelbar an dem Kraftfahrzeugbauteil (4) anliegend angeordnet ist.

8. Ultraschallsensoranordnung (2) nach Anspruch 6 oder 7,
**dadurch gekennzeichnet, dass**
die Ultraschallsensorvorrichtung (3) auf einer dem Kraftfahrzeugbauteil (4) abgewandten Seite (33) zumindest teilweise mit einem Schutzelement (34) umgeben ist.

9. Kraftfahrzeug (1) mit einer Ultraschallsensoranordnung (2) nach einem der Ansprüche 6 bis 8.

## Claims

1. Ultrasonic sensor apparatus (3) for a motor vehicle (1), having a printed circuit board (7) which is of flexible design at least in regions and has a first printed circuit board region (8) on which a transducer element (10) is arranged, which transducer element is designed for emitting and/or receiving ultrasonic signals, wherein the printed circuit board (7) is of flexible design on the first printed circuit board region (8) or on a second printed circuit board region (9), and a second transducer element (11) of the ultrasonic sensor apparatus (3), which second transducer element is separate from the first transducer element (10) and is designed for emitting and/or receiving ultrasonic signals, is arranged on the second printed circuit board region (9), and wherein the printed circuit board (7) has at least one flexible strip-like first printed circuit board sub-element (12) as the second printed circuit board region (9), which first printed circuit board sub-element is connected to a printed circuit board main element (13) of the printed circuit board (7) as the first printed circuit board region (8) or which first printed circuit board sub-element is connected to a printed circuit board main element (13) of the printed circuit board (7), which printed circuit board main element is arranged outside the first printed circuit board region (8) and the second printed circuit board region (9), and the printed circuit board (7) has a flexible strip-like second printed circuit board sub-element (16) as the first printed circuit board region (8), which second printed circuit board sub-element is connected to the printed circuit board main element (13), **characterized in that** the printed circuit board (7) comprises at least one flexible strip-like third printed circuit board sub-element (21) as the third printed circuit board region (20), which third printed circuit board sub-element, on a side (22) which is averted from the printed circuit board main element (13), has an interface (23) for connection to the motor vehicle (1) and is designed without a transducer element.

2. Ultrasonic sensor apparatus (3) according to Claim 1, **characterized in that** at least one of the transducer elements (10, 11) is arranged on a side (15), which is averted from the printed circuit board main element (13), of the respective printed circuit board sub-element (12, 16) .

3. Ultrasonic sensor apparatus (3) according to Claim 1 or 2, **characterized in that** a control electronics system (14) of the ultrasonic sensor apparatus (3), which control electronics system is electrically connected to the first transducer element (10) and/or to the second transducer element (11), is arranged on the printed circuit board main element (13).

4. Ultrasonic apparatus (3) according to one of Claims 1 to 3, **characterized in that** the printed circuit board main element (13) is of rigid design.

5. Ultrasonic sensor apparatus (3) according to one of the preceding claims, **characterized in that** a fastening element (30), in particular an adhesive edge, for fastening to the motor vehicle (1) is arranged in an outer edge region (29) of the printed circuit board (7).

6. Ultrasonic sensor arrangement (32) having a fastening element (30) and at least one ultrasonic sensor apparatus (3) according to one of the preceding claims which is arranged on a motor vehicle component (4) of a motor vehicle (1).

7. Ultrasonic sensor arrangement (2) according to Claim 6, **characterized in that** a printed circuit board (7), which is flexible at least in regions, of the ultrasonic sensor apparatus (3) with a control electronics system (14), which is arranged on the printed circuit board (7), of the ultrasonic sensor apparatus (3) is arranged so as to bear directly against the motor vehicle component (4).

8. Ultrasonic sensor arrangement (2) according to Claim 6 or 7, **characterized in that** the ultrasonic sensor apparatus (3), on a side (33) which is averted from the vehicle component (4), is at least partially surrounded by a protective element (34).

9. Motor vehicle (1) having an ultrasonic sensor arrangement (2) according to one of Claims 6 to 8.

## Revendications

1. Dispositif de détection par ultrasons (3) pour un véhicule automobile (1), muni d'une carte de circuit imprimé flexible au moins par endroits (7), avec une première zone de carte de circuit imprimé (8), sur laquelle est disposé un élément transducteur (10), qui est configuré pour émettre et/ou recevoir des signaux ultrasonores,
dans lequel la carte de circuit imprimé (7) est réalisée sous forme flexible à la première zone de carte de circuit imprimé (8) et/ou à une deuxième zone de carte de circuit imprimé (9), et un deuxième élément transducteur (11) du dispositif de détection par ultrasons (3) séparé du premier élément transducteur (10) est disposé sur la deuxième zone de carte de circuit imprimé (9), qui est configuré pour émettre et/ou recevoir des signaux ultrasonores, et
dans lequel la carte de circuit imprimé (7) présente au moins un premier élément partiel de carte de circuit imprimé en forme de bande flexible (12) en tant que deuxième zone de carte de circuit imprimé (9), qui est relié à un élément principal de carte de circuit imprimé (13) de la carte de circuit imprimé (7) en tant que première zone de carte de circuit imprimé (8) ou qui est relié à un élément principal de carte de circuit imprimé (13) de la carte de circuit imprimé (7) disposé à l'extérieur de la première zone de carte de circuit imprimé (8) et de la deuxième zone de carte de circuit imprimé (9), et la carte de circuit imprimé (7) présente un deuxième élément partiel de carte de circuit imprimé en forme de bande flexible (16) en tant que première zone de carte de circuit imprimé (8), qui est relié à l'élément principal de carte de circuit imprimé (13),
**caractérisé en ce que** la carte de circuit imprimé (7) comprend au moins un troisième élément partiel de carte de circuit imprimé en forme de bande flexible (21) en tant que troisième zone de carte de circuit imprimé (20), qui présente sur un côté (22) détourné de l'élément principal de carte de circuit imprimé (13) une interface (23) destinée au raccordement au véhicule automobile (1) et qui est formé sans élément transducteur.

2. Dispositif de détection par ultrasons (3) selon la revendication 1, **caractérisé en ce qu'**au moins un des éléments transducteurs (10, 11) est disposé sur un côté (15) de l'élément partiel de carte de circuit imprimé respectif (12, 16) détourné de l'élément principal de carte de circuit imprimé (13).

3. Dispositif de détection par ultrasons (3) selon une revendication 1 ou 2, **caractérisé en ce qu'**une électronique de commande (14) du dispositif de détection par ultrasons (3), qui est électriquement reliée au premier élément transducteur (10) et/ou au deuxième élément transducteur (11), est disposée sur l'élément principal de carte de circuit imprimé (13).

4. Dispositif de détection par ultrasons (3) selon l'une quelconque des revendications 1 à 3, **caractérisé en ce que** l'élément principal de carte de circuit imprimé (13) est réalisé sous forme rigide.

5. Dispositif de détection par ultrasons (3) selon l'une quelconque des revendications précédentes, **caractérisé en ce qu'**un élément de fixation (30), en particulier un bord adhésif, est disposé dans une région de bord extérieure (29) de la carte de circuit imprimé (7) pour la fixation au véhicule automobile (1).

6. Système de détection par ultrasons (2) avec un élément de fixation (30) et au moins un dispositif de détection par ultrasons (3) selon l'une quelconque des revendications précédentes disposé sur un composant de véhicule automobile (4) d'un véhicule automobile (1).

7. Système de détection par ultrasons (2) selon la revendication 6, **caractérisé en ce qu'**une carte de circuit imprimé flexible au moins par endroits (7) du dispositif de détection par ultrasons (3) avec une électronique de commande (14) du dispositif de détection par ultrasons (3) disposée sur la carte de circuit imprimé (7) est disposée directement en application sur le composant de véhicule automobile (4).

8. Système de détection par ultrasons (2) selon une revendication 6 ou 7, **caractérisé en ce que** le dispositif de détection par ultrasons (3) est entouré au moins en partie par un élément de protection (34) sur un côté (33) détourné du composant de véhicule automobile (4).

9. Véhicule automobile (1) muni d'un ensemble de détection par ultrasons (2) selon l'une quelconque des revendications 6 à 8.
